# EUROPÄISCHE PATENTSCHRIFT

(11) **EP 1 111 217 B1**
(45) Veröffentlichungstag und Bekanntmachung des Hinweises auf die Patenterteilung: **06.04.2005**
(21) Anmeldenummer: 00127291.3
(22) Anmeldetag: 19.12.2000
(51) Int. Cl.: F02B 29/04

(54) **Ladeluftkühler**
Charge air cooler
Refroidisseur d'air d'admission

(30) Priorität: 23.12.1999 DE 19962391
(43) Veröffentlichungstag der Anmeldung: 27.06.2001
(73) Patentinhaber: Behr Industrietechnik GmbH & Co., 70469 Stuttgart (DE)
(72) Erfinder: Ruppel, Wolfgang, Dipl.-Ing., 75378 Bad Liebenzell (DE); Schmalzried, Günther, 71404 Korb (DE)
(74) Vertreter: Gleiss & Grosse

(56) Entgegenhaltungen:
- EP-A- 0 750 106
- CH-A- 516 740
- DE-A- 4 240 239
- DE-U- 29 723 421
- US-A- 3 355 877
- US-A- 4 474 162
- US-A- 5 394 854
- US-A- 5 758 718

## Beschreibung

Die Erfindung betrifft einen Ladeluftkühler für Verbrennungskraftmaschinen, mit mindestens zwei Kühlkreisläufen, die durch Wärmeübertragerblöcke geführt sind, die in Strömungsrichtung der Luft hintereinandergeschaltet sind und unterschiedliche Kühlmitteltemperaturen aufweisen.

Ladeluftkühler für Verbrennungskraftmaschinen sind bekannt (DE OS 23 42 787). Da die eintretende Luft bei solchen Ladeluftkühlern sehr hohe Temperaturen aufweist, besteht die Gefahr, dass die an der Eintrittsseite liegenden Wärmetauschelemente, in der Regel also mit Rippen versehene Rohre, thermisch sehr hoch belastet werden und daher, weil durch Kavitationserscheinungen bedingte Erosion zusätzlich zu erheblichen Wärmedehnungen auftreten kann, beschädigt werden können.

Man hat daher dieses Problem bei den vorher erwähnten bekannten Ladeluftkühlern dadurch zu lösen versucht, die Wärmeübertragung an den ersten Rohrreihen möglichst niedrig zu halten, dagegen erst in den darauffolgenden Rohrreihen den Wärmeaustausch bis zum Optimum zu erhöhen. Dies hat man entweder dadurch zu erreichen versucht, dass die Anzahl der Rippen pro Rohre in Richtung der durchströmenden Luft ansteigend gewählt wurde, oder dass die erste Rohrreihe auch rippenlos ausgeführt oder sogar mit einer Wärmeisolierung versehen wurde. Ladeluftkühler dieser Art sind daher sehr aufwendig. Bei den heute immer mehr üblich werdenden sehr hohen Eintrittstemperaturen der Ladeluft von bis zu 300°C oder sogar höher reichen solche Maßnahmen entweder auch nicht mehr aus oder führen zu Ladeluftkühlern, die in ihren Abmessungen sehr groß sind. Dies gilt auch für Ladeluftkühler nach der DE 196 44 584 A1, bei denen man die Wärmebelastung von Rippenrohrblöcken von Ladeluftkühlern im Bereich der Seitenteile dadurch versucht hat zu erniedrigen, dass die äußerste, an den Seitenteilen anliegende Wellrippenschicht jeweils entgegen der Ladeluftströmung über die Eintrittskante des Rippenrohrblockes nach vorne in den von den Seitenteilen und Wasserkästen gebildeten Eintrittsbereich für die Ladeluft verlegt wurde. Dadurch kann zwar eine schnellere Erwärmung der Seitenteile erreicht werden. Das Problem auftretender Erosion im Eintrittsbereich läßt sich dadurch aber nicht ohne weiteres lösen.

Aus der DE 41 14 704 C1 ist es bekannt, die Abkühlung von Ladeluft in zwei Stufen durchzuführen. Die Abkühlung erfolgt dort zunächst in einem Hochtemperaturladeluftkühler, der mit einem Hochtemperaturrückkühler in Verbindung steht und dann in einem Niedertemperaturladeluftkühler, der in einem Kreislauf mit einem Niedertemperaturrückkühler liegt. Diesen beiden Ladekluftkühlern ist dann noch ein Motorölkühler und ein Getriebeölkühler nachgeschaltet. Der Ladeluftkühler entspricht daher dem eingangs erwähnten Ladeluftkühler, der durch mindestens zwei Kühlkreisläufe gekennzeichnet ist, die durch Wärmeübertragerblöcke geführt sind, die in Strömungsrichtung der Luft hintereinander geschaltet sind. Diese beiden Kühlkreisläufe weisen unterschiedliche Kühlmitteltemperaturen auf. Möglichkeiten allerdings, den Hochtemperaturkühler so zu gestalten, dass er ohne die Abmessungen zu vergrößern, die hohen Eintrittstemperaturen dauerhaft übersteht, sind dort nicht erwähnt.

Aus DE 42 40 239 A1 ist eine Ladeluftkühlung für eine Verbrennungskraftmaschine bekannt, die einen Vorkühler, und einen stromabwärts von diesem angeordneten Kühler umfasst. Bei dem Vorkühler kann es sich und einen von einem flüssigen Kühlmittel durchströmten Wärmetauscher handeln. Kühler und Vorkühler weisen getrennte Kühlkreisläufe auf. Die Kühlmitteltemperatur des Vorkühlers liegt oberhalb der Kühlmitteltemperatur des Kühlers.

Der vorliegenden Erfindung liegt die Aufgabe zugrunde, einen Ladeluftkühler so auszubilden, dass mit wirtschaftlich vertretbarem Aufwand Ladeluft mit sehr hohen Temperaturen gekühlt werden kann, ohne dass die vorher erwähnten Probleme auftreten.

Zur Lösung dieser Aufgabe wird mit der Erfindung für einen Ladeluftkühler der eingangs erwähnten Art vorgeschlagen, dass mindestens der in Strömungsrichtung der Luft als erster vorgesehene Wärmeübertragerblock aus einem erosions- und temperaturbeständigeren Material als die nachgeschalteten wärmeübertragerblöcke hergestellt ist und in einem Hochtemperaturkühlmittelkreis liegt, in dem die Kühlmitteltemperatur so hoch wie möglich gewählt ist.

Durch diese Maßnahme wird es möglich, an der Eintrittsseite der Ladeluft einen Vorbaukühler vorzusehen, der von vorneherein dazu ausgelegt ist, zunächst die sehr hohen Ladelufttemperaturen auf ein erträgliches Maß herunterzukühlen, so dass dann die nachgeschalteten Wärmeübertragerblöcke nach den bekannten Kriterien ausgelegt werden können. So kann für den Vorbaukühler beispielsweise eine Kühlmitteltemperatur vorgesehen werden, die das Temperaturgefälle zwischen eintretender Ladeluft und Kühlmitteltemperatur verringert. Weil der Vorbaukühler auch aus einem temperaturbeständigeren Material als die nachgeschalteten Wärmeübertragerblöcke hergestellt ist, wird es auf diese Weise möglich, die Beschädigungsgefahr am Eintritt der Ladeluft weitgehend auszuschalten.

Es ist vorgesehen, dass von drei Wärmeübertragerblöcken die ersten beiden Wärmeübertragerblöcke in einem Hochtemperaturkühlmittelkreis und nur der letzte in einem Niedertemperaturkühlmittelkreis liegen. Die Temperatur des in den beiden ersten Kühlmittelkreisen verwendeten Kühlmittels kann an der Eingangsseite relativ hoch liegen, wobei der Durchfluß des Kühlmittels so gewählt ist, dass im ersten Wärmeübertragerblock eine Abkühlung der bis zu 300° heißen Ladeluft auf Werte um 180°C und im zweiten Wärmeübertragerblock auf Werte in der Größenordnung von 110°C erreicht wird.

Bei einer solchen Ausgestaltung kann die Vorlauftemperatur des Kühlmittels im dritten Wärmeübertragerblock etwa 45° bis 50°C betragen, wie das in üblichen Kühlern der Fall ist und es kann die Luft auf etwa 60°C oder etwas darüber abgekühlt werden.

In Ausgestaltung der Erfindung kann der erste Wärmeübertragerblock ein Rundrohrkühler aus Stahl, aus einer Kupferzinklegierung oder auch aus einer Aluminiumlegierung sein. Der zweite und der dritte Wärmeübertragerblock dagegen können in herkömmlicher Stapelbauweise, wie sie beispielsweise in der DE 196 44 586 A1 beschrieben ist, aus Aluminiumelementen hergestellt sein. Alle Wärmeübertragerblöcke schließlich können zu einer Ladeluftkühlereinheit zusammengefaßt sein, die als Ganzes in entsprechende Anlagen oder in Fahrzeuge eingebaut, aber von unterschiedlichen Kühlmittelkreisen versorgt wird.

Die Erfindung ist in der Zeichnung anhand von Ausführungsbeispielen dargestellt und wird im folgenden erläutert. Es zeigen:
- Fig. 1: ein Blockschaltbild eines erfindungsgemäßen Ladeluftkühlers für eine Verbrennungskraftmaschine,
- Fig. 2: ein Blockschaltbild für eine Variante eines Ladeluftkühlers nach der Erfindung,
- Fig. 3: eine Seitenansicht einer Verbrennungskraftmaschine, die mit erfindungsgemäßen Ladeluftkühlern ausgestattet ist,
- Fig. 4: eine vergrößerte Darstellung des hinter dem Turbolader eingesetzten Vorkühler des Ladeluftkühlers der Fig. 3,
- Fig. 5: die Stirnansicht der Verbrennungskraftmaschine nach Fig. 3 und
- Fig. 6: die vergrößerte Darstellung eines Ladeluftkühlers nach der Erfindung, der als Variante des Ladeluftkühlers nach Fig. 3 einsetzbar ist.

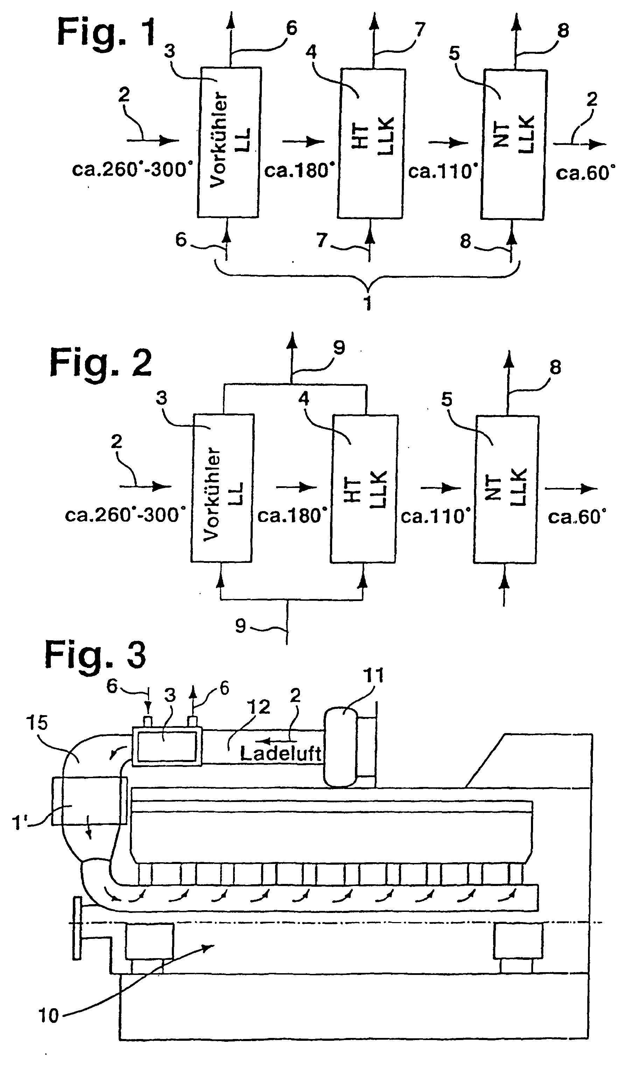

Die Fig. 1 zeigt schematisch den prinzipiellen Aufbau eines Ladeluftkühlers 1 nach der Erfindung, bei dem die im Sinn der Pfeile 2 durchströmende Ladeluft, die mit einer Eintrittstemperatur bis zu 300°C oder höher den Ladeluftkühler erreicht, auf eine Endtemperatur von ca. 60°C abgekühlt wird. Um bei diesen extrem hohen Eintrittstemperaturen eine Beschädigung des Ladeluftkühlers bzw. dessen Wärmeübertragungselementen zu vermeiden, ist erfindungsgemäß vorgesehen, dass der Ladeluftkühler 1 aus verschiedenen Wärmeübertragerblöcken 3, 4 und 5 aufgebaut ist, die jeweils für sich in einem gesonderten Kühlkreis aufliegen, durch den ein Kühlmittel im Sinn der Pfeile 6, 7 und 8 jeweils durch die Wärmeübertragerblöcke 3, 4 und 5 geleitet wird. Nach Fig. 1 ist dabei der erste in Strömungsrichtung 2 der Ladeluft liegende Wärmeübertragerblock 3 als ein sogenannter Vorkühler ausgebildet, der aus einem Material besteht, das wesentlich erosions- und temperaturbeständiger ist als das Material der nachgeschalteten Wärmeübertragerblöcke 4 und 5. Dieser Vorkühler ist auch konstruktiv so ausgeführt, dass er unempfindlich gegenüber Längenänderungen infolge von Wärmeausdehnungen ist. Das im Sinn der Pfeile 6 zu- und durch den ersten Wärmeübertragerblock 3 strömende Kühlmittel kann dabei einem Hochtemperaturkühlmittelkreis zugeordnet sein und es kann beim Eintritt in den Vorkühler 3 beispielsweise eine Temperatur von etwa 100°C aufweisen. Durch diese Maßnahme kann zusätzlich zu der baulichen Ausgestaltung des Wärmeübertragerblockes 3 auch die Temperaturdifferenz zwischen der eintretenden Ladeluft und dem Kühlmittel kleingehalten werden, so dass auch dadurch ein gewisser Schutz des Wärmeübertragerblockes 3 gegen temperaturbedingte Beschädigungen gegeben ist.

Der zweite Wärmeübertragerblock 4 wird mit Ladeluft mit einer Eintrittstemperatur von ca. 180°C beaufschlagt. Auf diese Temperatur wird die Ladeluft im ersten Wärmeübertragerblock 3 in etwa abgekühlt. Auch der zweite Wärmeübertragerblock 4 kann in einem Hochtemperaturkühlmittelkreis liegen. Er wird so ausgelegt, dass die Ladeluft beim Austritt aus diesem zweiten Wärmeübertragerblock 4 nur noch eine Temperatur von ca. 110°C aufweist. Der dritte Wärmeübertragerblock 5 kann daher - ebenso wie im Prinzip auch schon der Wärmeübertragerblock 4 - in üblicher Weise ausgelegt werden und beispielsweise von einem Niedertemperaturkreis im Sinn der Pfeile 8 mit Kühlmittel beaufschlagt werden, das beispielsweise beim Eintritt in den Wärmeübertragerblock 5 eine Temperatur von 45°C bis 50°C aufweist, so dass die Ladeluft im dritten Wärmeübertragerblock 5 auf ca. 60°C abgekühlt werden kann.

Entscheidend für die Erfindung ist es, dass der Ladeluftkühler in verschiedene Wärmeübertragerblöcke und in einen sogenannten Vorkühler aufgeteilt wird, die jeweils von Kühlkreisläufen beaufschlagt werden, die auf die Eintrittstemperaturen der Ladeluft abgestimmt sein können.

Die Fig. 2 zeigt eine Variante des Ladeluftkühlers nach Fig. 1 insofern, als hier die beiden ersten Wärmeübertragerblöcke 3 und 4 in einem gemeinsamen Kühlkreislauf 9 liegen, während der dritte Wärmeübertragerblock 5 in einem getrennten Niedertemperaturkreislauf wie beim Ausführungsbeispiel nach Fig. 1 liegt.

Die Fig. 3, 4 und 5 zeigen nun ein praktisches Beispiel für die Ausgestaltung eines Ladeluftkühlers nach der Erfindung. Fig. 3 läßt erkennen, dass einer Verbrennungskraftmaschine 10, beispielsweise einem Großmotor, ein Turbolader 11 für die Ladeluft zugeordnet ist, die im Sinn der Pfeile 2 jeweils den einzelnen Zylindern zugeführt wird. Bei dieser Ausführungsform ist vorgesehen, dass der Vorkühler 3 in die vom Turbolader 11 kommende Zuführungsleitung 12 eingesetzt ist, und dass diesem Vorkühler 3 dann ein Ladeluftkühler 1' nachgeschaltet ist, der entweder konventioneller Bauart ist oder die beiden Wärmeübertragerblöcke 4 und 5 enthält, die, wegen der hinter dem Vorkühler 3 erreichten Ladelufttemperatur von 180°C durchaus in üblicher Weise ausgebildet und mit Kühlmittel beaufschlagt sein können.

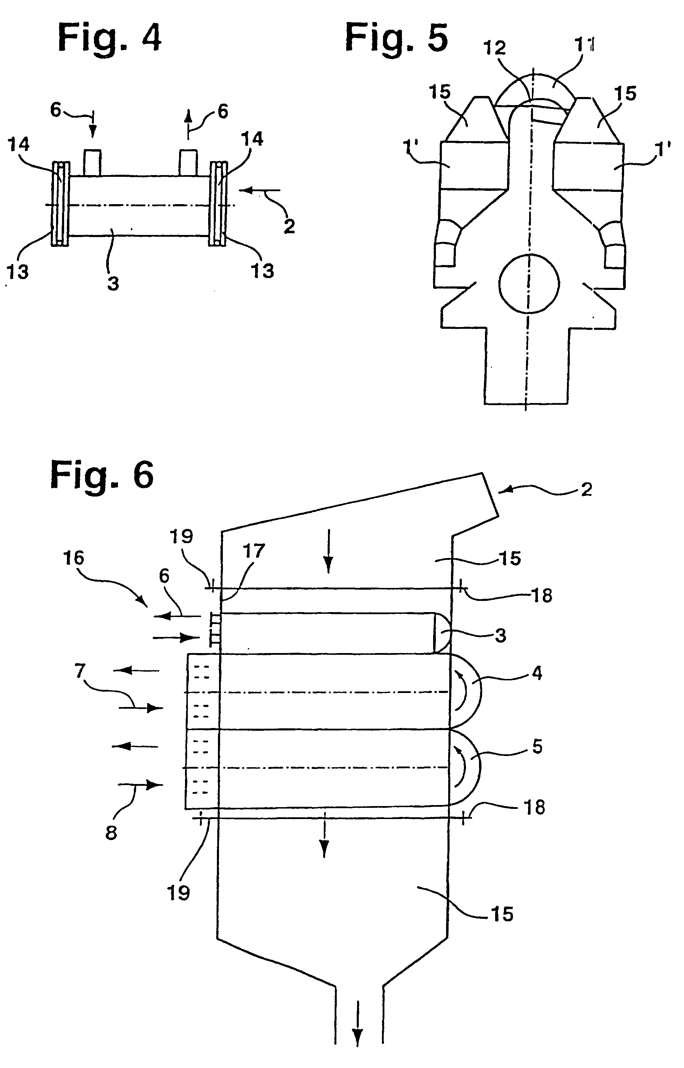

Die Fig. 4 zeigt den in die Leitung 12 einsetzbaren Vorkühler 3, dem das Kühlmittel durch den Hochtemperaturkühlmittelkreislauf 6 zugeführt wird. Dieser Vorkühler 3 ist beim Ausführungsbeispiel im Durchmesser dem Durchmesser der Leitung 12 angepaßt und mit zwei Halteflanschen 13 versehen, die mit Abdichtringen 14 ausgerüstet sind.

Die Fig. 5 macht deutlich, dass die vom Turbolader 11 kommende Ladeluft hinter dem Vorkühler 3 auf zwei, jeweils einer Seite der Verbrennungskraftmaschine 10 zugeordnete Luftführungen 15 aufgeteilt wird, und dass in diesen Luftführungen jeweils der Ladeluftkühler 1' eingebaut ist, der die Wärmeübertragerblöcke 4 und 5 enthält.

Die Fig. 6 zeigt nun eine Variante eines Ladeluftkühlers 16, der anstelle der beiden Ladeluftkühler 1' in die Zuführleitung 15 einsetzbar ist. In diesem Fall enthält der Ladeluftkühler 16 alle drei Wärmeübertragerblöcke 3, 4 und 5. Für diese Variante ist daher der Einbau des Vorkühlers 3 nach Fig. 3 und 4 nicht erforderlich. Der Ladeluftkühler 16 ist mit einem Einbaugehäuse 17 versehen, das Flansche 18 aufweist und mit diesen zwischen zugeordnete Flansche 19 der Ladeluftführung 15 eingeschraubt ist. Dieser Ladeluftkühler 16 kann dabei nach dem in Fig. 1 oder in Fig. 2 gezeigten Schema von unterschiedlichen Kühlkreisläufen beaufschlagt werden. Der dem Ladeluftkühler 16 bei diesem Ausführungsbeispiel integrierte Vorkühler 3 wird ebenfalls aus anderem Material hergestellt als die nachgeschalteten Wärmeübertragerblöcke 4 und 5.

Bei allen Ausführungsbeispielen kann vorgesehen werden, dass der erste Wärmeübertragerblock 3 ein Rundrohrkühler oder ein Wärmeübertrager ähnlich dem Rohrbündel eines Rundrohrwärmeübertragers aus Stahl, aus einer Kupfer-Zink-Legierung oder auch aus einer Aluminium-Legierung ist. Der zweite und der dritte Wärmeübertragerblock 4, 5 können in üblicher Weise in Stapelbauweise aus Aluminiumelementen hergestellt sein.

## Patentansprüche

1. Ladeluftkühler für Verbrennungskraftmaschinen mit mindestens zwei Kühlkreisläufen (6, 7, 8), die durch Wärmeübertragerblöcke (3, 4, 5) geführt sind, die in Strömungsrichtung (2) der Luft hintereinander geschaltet sind und unterschiedliche Kühlmitteltemperaturen aufweisen, wobei
- mindestens der in Strömungsrichtung (2) der Luft als erster vorgesehene Wärmeübertragerblock (3) aus einem erosionsund temperaturbeständigeren Material als die nachgeschalteten Wärmeübertragerblöcke (4, 5) hergestellt ist und in einem Hochtemperaturkühlmittelkreis (6) liegt, in dem die Kühlmitteltemperatur so hoch wie möglich gewählt ist, wobei
- die ersten beiden Wärmeübertragerblöcke (3,4) in einem Hochtemperaturkühlmittelkreis (9) und der letzte in einem Niedertemperaturkühlmittelkreis (8) liegt, **dadurch gekennzeichnet, dass**
- die Temperatur des in den beiden ersten Wärmeübertragerblöcken (3, 4) verwendeten Kühlmittels an der Eingangsseite etwa 100°C beträgt und der Durchfluss des Kühlmittels so gewählt ist, dass im ersten Wärmeübertragerblock (3) eine Abkühlung der bis zu 300°C oder darüber heißen Ladeluft auf Werte um 180° C und im zweiten Wärmeübertragerblock (4) auf Werte in der Größenordnung von 110°C erreicht wird.

2. Ladeluftkühler nach Anspruch 1, **dadurch gekennzeichnet, dass** im dritten Wärmeübertragerblock (5) die Vorlauftemperatur des Kühlmittels etwa 45° bis 50°C beträgt und die Luft auf etwa 60°C abgekühlt wird.

3. Ladeluftkühler nach Anspruch 1, **dadurch gekennzeichnet, dass** der erste Wärmeübertragerblock (3) ein Rundrohrkühler aus Stahl aus einer Kupfer-Zinklegierung oder auch aus einer Aluminiumlegierung ist.

4. Ladeluftkühler nach Anspruch 1, **dadurch gekennzeichnet, dass** der zweite und der dritte Wärmeübertragerblock (4,5) in Stapelbauweise aus Aluminiumelementen hergestellt ist.

## Claims

1. A charge air cooler for internal combustion engines having at least two cooling circulations (6, 7, 8) which are guided through heat transfer blocks (3, 4, 5) which are connected behind one another in the flow direction (2) of the air and have different coolant temperatures, wherein
- at least the heat transfer block (3) provided as the first in the flow direction (2) of the air is produced of a material that is more erosion-resistant and more temperature-stable than that of the heat transfer blocks (4, 5) which follow, and is situated in a high-temperature coolant circuit (6), the coolant temperature being selected to be as high as possible, wherein
- the first two heat transfer blocks (3, 4) are situated in a high-temperature coolant circuit (9) and the last one in a low-temperature coolant circuit (8), **characterised in that**
- the temperature of the coolant used in the first two heat transfer blocks (3, 4) is approximately 100 °C at the inlet side and **in that** the flow of the coolant is selected such that, in the first heat transfer block (3), a cooling of the hot charge air, which is 300 °C or more, is achieved to values of about 180 °C and, in the second heat transfer block (4), to values in the magnitude of 110 °C.

2. The charge air cooler according to claim 1, **characterised in that**, in the third heat transfer block (5), the forward-flow temperature of the coolant is approximately 45 to 50 °C and the air is cooled to approximately 60 °C.

3. The charge air cooler according to claim 1, **characterised in that** the first heat transfer block (3) is a circular-tube cooler made of steel, of a copper-zinc alloy or of an aluminium alloy.

4. The charge air cooler according to claim 1, **characterised in that** the second and third heat transfer block (4, 5) are produced in a stack-type construction of aluminium elements.

## Revendications

1. Refroidisseur d'air d'admission pour moteurs à combustion interne avec au moins deux circuits de refroidissement (6, 7, 8) passant à travers des échangeurs thermiques (3, 4, 5) qui sont montés en série dans le sens de la circulation (2) de l'air et dont le réfrigérant présente des températures différentes,
- au moins l'échangeur thermique (3) prévu comme le premier dans le sens de la circulation (2) de l'air étant fabriqué en un matériau qui présente une plus grande résistance à l'érosion et à la chaleur que les échangeurs thermiques en aval (4, 5) et se trouvant dans un circuit de refroidissement à haute température (6) pour lequel on choisit une température de réfrigérant la plus haute possible,
- les deux premiers échangeurs thermiques (3, 4) se trouvant dans un circuit de refroidissement à haute température (9), et le dernier se trouvant dans un circuit de refroidissement à basse température (8), **caractérisé en ce que**
- la température du réfrigérant utilisé dans les deux premiers échangeurs thermiques (3, 4) sur le côté entrée s'élève à environ 100° C, et le débit du réfrigérant est choisi de manière à obtenir un refroidissement de l'air d'admission d'une température de jusqu'à 300° C ou plus à des valeurs d'environ 180° C dans le premier échangeur thermique (3), et des valeurs de l'ordre de 110° C dans le deuxième échangeur thermique (4).

2. Refroidisseur d'air d'admission selon la revendication 1, **caractérisé en ce que** dans le troisième échangeur thermique (5), la température d'entrée du réfrigérant s'élève à environ 45° à 50° C, et l'air se refroidit jusqu'à atteindre une température d'environ 60° C.

3. Refroidisseur d'air d'admission selon la revendication 1, **caractérisé en ce que** le premier échangeur thermique (3) est un refroidisseur tubulaire en acier, en alliage cuivre-zinc ou bien en alliage d'aluminium.

4. Refroidisseur d'air d'admission selon la revendication 1, **caractérisé en ce que** le deuxième et le troisième échangeur thermique (4, 5) sont constitués d'éléments en aluminium empilés les uns sur les autres.
